# EUROPÄISCHE PATENTSCHRIFT

(11) **EP 1 592 532 B1**
(45) Veröffentlichungstag und Bekanntmachung des Hinweises auf die Patenterteilung: **14.06.2006**
(21) Anmeldenummer: 04739974.6
(22) Anmeldetag: 17.06.2004
(51) Int. Cl.: B23K 26/14, B23K 26/06, H01S 3/00

(54) **LASERKOPF IN EINER LASERSTRAHLBEARBEITUNGSMASCHINE MIT WECHSELDÜSEN**
LASER HEAD OF A LASER BEAM PROCESSING MACHINE COMPRISING ALTERNATING NOZZLES
TETE LASER D'UNE MACHINE D'USINAGE PAR FAISCEAU LASER POURVUE DE BUSES DE REMPLACEMENT

(30) Priorität: 25.06.2003 EP 03014250
(43) Veröffentlichungstag der Anmeldung: 09.11.2005
(73) Patentinhaber: Diem, Reinhard, 71083 Herrenberg (DE)
(72) Erfinder: Diem, Reinhard, 71083 Herrenberg (DE)
(74) Vertreter: Klocke, Peter
(86) Internationale Anmeldenummer: PCT/EP2004/006514
(87) Internationale Veröffentlichungsnummer: WO 2004/113012

(56) Entgegenhaltungen:
- US-A- 5 229 572
- PATENT ABSTRACTS OF JAPAN Bd. 2000, Nr. 08, 6. Oktober 2000 (2000-10-06) -& JP 2000 126888 A (NIPPEI TOYAMA CORP), 9. Mai 2000 (2000-05-09)
- PATENT ABSTRACTS OF JAPAN Bd. 016, Nr. 388 (M-1297), 18. August 1992 (1992-08-18) -& JP 04 127988 A (HITACHI LTD), 28. April 1992 (1992-04-28)
- PATENT ABSTRACTS OF JAPAN Bd. 009, Nr. 213 (M-408), 30. August 1985 (1985-08-30) -& JP 60 072694 A (MATSUSHITA DENKI SANGYO KK), 24. April 1985 (1985-04-24)

## Beschreibung

Die vorliegende Erfindung betrifft einen Laserkopf in einer Laserstrahlbearbeitungsmaschine mit einem Gehäuse, in dessen Inneren eine Strahlkammer und am Ende eine Düse für den Austritt des Laserstrahls und eines Arbeitsgases angeordnet ist.

Derartige Laserköpfe sind allgemein bekannt und werden insbesondere im Zusammenhang mit Laserschweißen auch als Schweißköpfe bezeichnet. Grundsätzlich erfolgt der Einsatz derartiger Laserköpfe jedoch nicht nur beim Schweißen sondern auch beim Trennen von Werkstoffen.

Die Laserköpfe (Schweißköpfe) weisen im Prinzip einen Hohlspiegel oder eine Linse auf, die die Laserstrahlung fokussiert. Der zusammenlaufende Strahl wird durch eine Strahlkammer innerhalb eines Gehäuses geführt, die mit einer Düse abgeschlossen ist. Durch diese Düse tritt der Strahl aus und wird auf die Bearbeitungsstelle fokussiert. Die bekannten Laserköpfe weisen in der Regel außerdem zusätzliche Bohrungen auf, durch die ein Arbeitsgas entweder koaxial in die Strahlkammer eingebracht oder über zusätzliche Bohrungen durch eine separate Düse von der Außenseite des Laserkopfes zugeführt wird.

Bei Änderungen der Einstellungen des Laserkopfes aufgrund beispielsweise unterschiedlicher Materialien oder Materialstärken muss zum Zwecke der Fokussierung einerseits die Optik eingestellt, andererseits aber auch die Düse gewechselt werden. Außerdem kann auch während der Bearbeitung leicht eine Verschmutzung der sehr feinen Düse durch Materialspritzer erfolgen, so dass aus diesem Grund ein Düsenwechsel notwendig ist..

Um bei geänderten Einstellungen trotzdem durch die schmale Düse zu treffen und die Düse nicht wechseln zu müssen, werden bei verschiedenen Einrichtungen die Fokussierlinsen waagrecht verschoben. Dies produziert aber Fehler in der Fokussierung, weil die Linse nicht mehr mittig durchleuchtet wird. Deshalb ist der Fokus nicht optimal, was beim Lasertrennen zu schlechteren Schneidergebnissen führt. Zudem führt die unmittige Durchleuchtung zu Spannungen in der Linse, wodurch die Wärmeverteilung und somit der Brechungsindex sich unterschiedlich an den Rändern der Linse ändert. Dies führt wiederum zu einer weiteren Verschlechterung des Fokus.

Aus der JP 64 07 1590 ist hierzu bekannt, eine Linsenscheibe zu verwenden, die mehrere Linsen aufweist, die um eine Achse drehbar in den Strahlgang gedreht werden können. Damit kann der Wechsel der Linsen zwar schnell erreicht werden, jedoch ist es nach wie vor erforderlich, die für den jeweiligen Anwendungsfall zweckmäßigste Düse anzubringen.

In der Praxis wird daher manuell die Düse abgeschraubt und eine neue Düse an dem Gehäuse des Schweißkopfes befestigt. Dies erfordert relativ viel Zeit und stört den automatischen Ablauf.

Aus der JP 62 25 4993 ist ein automatischer Düsenaustauscher bekannt, der ein Düsenmagazin aufweist. Dieses Düsenmagazin hat die Form einer vertikal angeordneten Scheibe und einer Vielzahl von darauf angeordneten Düsen. Die für den nächsten Bearbeitungsschritt erforderliche Düse wird auf der Scheibe durch Drehung des Magazins ausgewählt und über einen Wechselarm ausgetauscht.

In der JP 06 02 3580 wird eine ähnliche Einrichtung zum Austauschen von Düsen beschrieben, bei der der Laserkopf durch X-Y Bewegung zu einem Düsenaustauschteil fährt, welches eine Vielzahl von verschiedenen Düsen trägt und sich dreht.

Aus der JP 2000-126888 A sind verschiedene Ausgestaltungen von Wechseldüsen bekannt. In einer Ausgestaltung befindet sich ein Düsenträger 36, der um eine horizontale Achse drehbar ist. Daran befinden sich zwei Wechseldüsen, wobei jeder Wechseldüse ein auf der anderen Seite der Drehachse angeordneter Strahlkanal zugeordnet ist, durch den der Laserstrahl den Düsenträger durchdringt, bevor er die Düse erreicht. In einer anderen Ausbildung ist ein scheibenförmiger Düsenträger vorgesehen, der eine Drehachse aufweist, die parallel zur optischen Achse des Laserstrahls verläuft. Die Düsenscheibe weist zwei Düsen auf und rotiert mittels einer Stoßplatte, in dem Luft in einen Druckraum eingeblasen wird.

Alle diese vorgeschlagenen Lösungen können jedoch in der Anwendung nicht befriedigen und benötigen für den Wechsel der Düsen einen erheblichen apparativen Aufwand mit zusätzlichen Wechselarmen, sowie eine Neujustierung nach jedem Düsenwechsel.

Der vorliegenden Erfindung liegt daher die Aufgabe zugrunde, eine weitere Möglichkeit des Düsenwechsels vorzuschlagen.

Diese Aufgabe wird erfindungsgemäß durch einen Laserkopf mit den Merkmalen des Anspruchs 1 gelöst. Weitere vorteilhafte Ausgestaltungen sind den Unteransprüchen zu entnehmen. Gemäß der Erfindung befindet sich an dem Gehäuse ein kalottenförmiger Düsenkopf. Die Kalotte kann dabei auch die Form einer Halbkugel aufweisen, die sich an das Gehäuse des Laserkopfes anschließt und an dieses angepasst ist. Auf der Innenseite des Düsenkopfes sind Wechseldüsen vorgesehen, die um eine Drehachse schräg in einem Winkel zur Laserachse drehbar an der Wand des Düsenkopfes gehalten und in den Strahlgang des Laserstrahls einbringbar sind. Damit kann bei einem Düsenwechsel die jeweils für den nächsten Verfahrensschritt erforderliche Düse in den Strahlengang gedreht werden, ohne dass ein aufwendiges weiteres Justieren und Herumhantieren an dem Düsenkopf notwendig ist. Dieser Aufbau ermöglicht auch dann die automatische Einbringung einer Düse, so dass die Rüstzeit erheblich reduziert, und die Zeitspanne eines mannlosen Betriebes erheblich verlängert wird.

Gemäß einer bevorzugten Ausbildung sind die Düsen auf einer Düsenscheibe angeordnet, wobei die Düsenöffnungen auf dem gleichen Radius zur Drehachse angeordnet sind. Zusätzlich kann vorzugsweise außen an der Düsenscheibe ein Zahnkranz vorgesehen sein, um die Düsenscheiben mittels eines Stellmotores verstellen zu können.

Um die gewünschte Genauigkeit bei der Einstellung der Düse zu erreichen, ist die Form der Düsenscheibe an die Form des kalottenförmigen Düsenkopfes angepasst und liegt flächig an der Innenseite des Düsenkopfes mit gleichem Krümmungsradius an.

Der Düsenkopf in dieser Ausgestaltung, beispielsweise als stabile Halbkugel, schützt die Düsenscheibe bzw. die Düsen vor Beschädigungen, die bisher durch die exponierten Düsen immer zuerst Opfer von Kollisionen mit dem Schneidgut waren.

Zum Wechseln der Düsen muss der Düsenkopf von dem Gehäuse abgenommen und wieder aufgesetzt werden. Hierzu kann beispielsweise ein entsprechendes Feingewinde oder auch ein Schnappverschluss vorgesehen sein. Unabhängig davon ist jedoch bei jedem Wechsel des Düsenkopfes eine neue Justierung der Düsen auf den Laserstrahl erforderlich, da bei derart geringen Abmessungen bei jedem Wechsel des Düsenkopfes mit Veränderungen zu rechnen ist. Daher wird gemäß einer weiteren vorteilhaften Ausbildung eine Exzenterscheibe in der Wand des Düsenkopfes vorgesehen, die um eine Achse drehbar ist und exzentrisch zu dieser Achse die Drehachse der Düsenscheibe trägt. Durch Drehen dieser Exzenterscheibe (x-Achse) und durch Drehung der Düsenscheibe (y-Achse) kann nach dem Wechsel des Düsenkopfes eine Düse der Düsenscheibe mit dem Düsenmittelpunkt exakt zum Laserstrahl in eine Achse gebracht werden. Dabei wird zuerst die Düsenöffnung durch Drehen der Exzenterscheibe auf die Kreislinie gebracht, auf der sich die Mittelpunkte der übrigen Düsenöffnungen befinden. Der seitliche Versatz und damit die entgültige Deckung wird dann durch Verdrehen der Düsenscheibe erreicht. Damit kann diese Stellung als Nullpunkt für den automatischen Düsenwechsel festgelegt werden. Bei der nachfolgenden Drehung der Düsenscheibe für den Wechsel der Düsen ist eine weitere Einstellung nicht erforderlich, da dann alle Düsen auf der Düsenscheibe zu dem Laserstrahl exakt ausgerichtet sind.

Gemäß einer weiteren Ausbildung des Läserkopfes ist die Kalottenöffnung für den Durchtritt des Laserstrahls größer als der Düsendurchmesser. Dadurch wird die Düsenscheibe durch den Überdruck in dem Innenraum zwischen dem Düsenkopf und dem Gehäuse von innen an die Wand des Düsenkopfes gedrückt und dichtet sich selbst ab.

Die in dem Gehäuse vorgesehenen Einlasskanäle für das Arbeitsgas sind gemäß einer bevorzugten Ausbildung versetzt zur Längsachse des Strahlraumes angeordnet. Damit wird erreicht, dass eine kontrollierte Verwirbelung des eingeblasenen Arbeitsgases erfolgt.

Um in dem von dem Düsenkopf gebildeten Raum im Anschluss an das Gehäuse unkontrollierte Verwirbelungen in dem sonst ungleichförmigen Raum zu verhindern, weist das Gehäuse einen Mündungstrichter auf, der mit einer sehr geringen Distanz vor der Düsenscheibe endet.

Mit dem erfindungsgemäß ausgestalteten Laserkopf und insbesondere dem Düsenkopf kann somit nach der einmaligen Justierung einer Düse ein automatisches Wechseln verschiedener Düsengrößen durchgeführt werden. Erst beim erneuten Anbringen des Düsenkopfes an das Gehäuse muss einmalig eine grundsätzliche Justierung erfolgen. Hierzu wird die ebenfalls kugelkappenförmige Exzenterscheibe, die die Drehachse für die Düsenscheibe trägt nach dem Anbringen des Düsenkopfes entsprechend verdreht. Dies kann beispielsweise von außen durch eine entsprechende Stellschraube erfolgen.

Aufgrund der Erfindung ist es vorteilhafterweise möglich, eine automatische Mittenbestimmung vorzunehmen, in dem von dem kalottenförmigen Düsenkopf umgebenen Raum eine Fotodiode angeordnet wird. Diese dient dazu, Streulicht, das von Reflektionsflächen einer für die automatische Mittenbestimmung verwendeten Düse einzufangen. Diese Düse weist zweckmäßigerweise eine größere Messbohrung auf als die Arbeitsdüsen und wird grob unter den Laserstrahl positioniert. Unter Volllast wird der Laserstrahl relativ zu der Messbohrung entlang einer Linie an die beiden gegenüberliegenden Randbereiche der Messbohrung bewegt. Dies geschieht durch Drehung der Exzenterscheibe (x-Achse) und die Drehung der Düsenscheibe (y-Achse). Bei Erreichen des jeweiligen Randbereichs entsteht das Streulicht, das von der Fotodiode aufgenommen wird. Dies ist der Augenblick für die Speicherung der Position. Aus den beiden Positionen wird der Mittelwert ermittelt und anschließend entlang einer Linie die senkrecht zu der vorherigen Linie steht und durch den Mittelpunkt geht, die beiden entgegengesetzten Randbereiche der Messbohrung angefahren. Auch hier wird durch die Auslösung der Fotodiode bei der Erkennung des Streulichts am Rand der Messbohrung die augenblickliche Position erfasst und daraus der Mittelwert gebildet. Dieser Mittelwert stellt dann den Kreismittelpunkt der Messbohrung dar, durch den dann bei Drehen der Düsenscheibe alle Düsenöffnungen gehen. Der besondere Vorteil dieser Justierung besteht darin, dass diese Mittenbestimmung unter Volllast des Lasers durchgeführt werden kann, da sich der Laserstrahl, bei unterschiedlichen Leistungen unterschiedlich verhält ("verbiegt"). Das von der Fotodiode aufzunehmende Streulicht entsteht durch die Berührung des Laserstrahls mit dem Material der Messdüse, das bei der Berührung beschädigt werden kann. Da es sich aber lediglich um eine Messdüse handelt, kann diese Beschädigung in Kauf genommen werden. Durch den Aufbau des Düsenkopfes und der Vielzahl der verschiedenen Düsen kann auf eine verzichtet werden. Dies kann durch eine entsprechende Software realisiert werden.

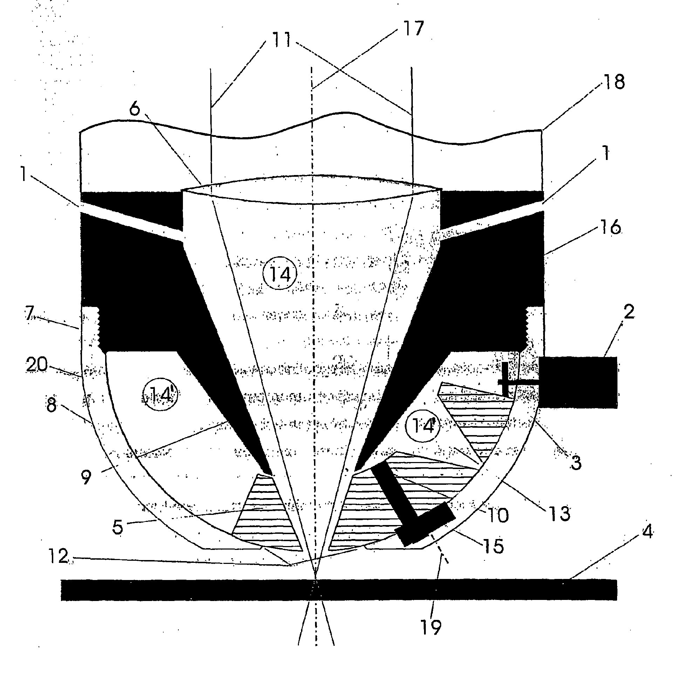

Nachfolgend wird die Erfindung anhand der einzigen Figur näher erläutert. Die Figur zeigt in einer Schnittdarstellung das düsenseitige Ende eines Laserkopfes 18 mit dem Gehäuse 16 und einem an dem Gehäuse angeschraubten halbkugelförmigen Düsenkopf 8. In bekannter Art und Weise gelangt der Laserstrahl 11 auf eine Linse 6 und wird von dort durch den durch die Spitze 9 gebildeten kegelförmigen Strahlraum 14 symmetrisch zur Längsachse 17 auf das Gut 4 fokussiert. Die in den Strahlraum 14 einmündenden Strömungskanäle 1 sind für das Einblasen des Arbeitsgases so angeordnet, dass ihre Achsen die Längsachse 17 nicht schneiden. Eine Fotodiode zur Erfassung von Streulicht in dem Strahlraum 14' kann beispielsweise an dem Gehäuse 16 an der waagrechten Fläche oberhalb der Spitze 9 in der Figur links der Düsenscheibe 5 angeordnet sein. Das Streulicht wird, wie vorstehend erwähnt, durch Reflektionen am Rand einer eigens dafür vorzusehenden Düse 13 mit vergrößertem Lochdurchmesser erzeugt. Das auftreffende Streulicht auf die Fotodiode startet die Erfassung der augenblicklichen Position.

Der Düsenkopf 8 ist über ein Schraubengewinde 7 an dem Gehäuse 16 befestigt. Am unteren Ende weist der Düsenkopf eine Öffnung 12 auf, die durch eine Düsenscheibe 5 verschlossen wird, die wiederum eine Vielzahl von verschiedenen Düsen 13 aufweist. Die Öffnung 12 ist wesentlich größer als die Öffnung einer Düse 13. In der Wand 20 des Düsenkopfes 8 befindet sich eine vorzugsweise kugelkappenförmige Exzenterscheibe 15, die um eine Achse 19 drehbar gelagert ist und versetzt zum Mittelpunkt der Exzenterscheibe 15 die Drehachse 10 für die Düsenscheibe 5 aufweist. Sowohl die Achse 19 als auch die Drehachse 10 sind schräg in einem Winkel zur Achse 17 des Laserstrahls 11 geneigt. In dem Ausführungsbeispiel liegen die Winkel bei ca. 20°. Die Düsenscheibe 5 ist in ihrer Krümmung an die Krümmung des Düsenkopfes 8 angepasst und weist in dem Ausführungsbeispiel einen Zahnkranz auf, in den das Antriebsrad 3 eines Stellmotors 2 eingreift. Über den Stellmotor 2 kann dann die für den nächsten Prozessschritt benötigte Düse in den Laserstrahl 11 gebracht werden.

## Patentansprüche

1. Laserkopf für eine Laserstrahlbearbeitungsmaschine mit einem Gehäuse (16), in dessen inneren eine Strahlkammer (14) und am Ende eine Düse (13) für den Austritt des Laserstrahls (11) und eines Arbeitsgases angeordnet ist, wobei sich an dem Gehäuse (16) ein Düsenkopf (8) befindet, der an der Innenseite angeordnete Wechseldüsen (5, 13) aufweist, die um eine Drehachse (10) drehbar an der Wand (20) des Düsenkopfes (8) gehalten und in den Strahlengang des Laserstrahls (11) einbringbar sind, **dadurch gekennzeichnet, dass** der Düsenkopf (8) Kalottenförmig ist, und die Drehachse (10) schräg zur Achse (17) des Laserstrahls (11) geneigt ist.

2. Laserkopf nach Anspruch 1, **dadurch gekennzeichnet, dass** die Düsen (13) auf einer Düsenscheibe (5) mit der Düsenöffnung auf gleichem Radius zur Drehachse (10) angeordnet sind.

3. Laserkopf nach Anspruch 2, **dadurch gekennzeichnet, dass** die Düsenscheibe (5) auf der der Innenseite des Düsenkopfes (8) zugewandten Seite entsprechend der Krümmung des Düsenkopfes geformt ist.

4. Laserkopf nach Anspruch 3, **dadurch gekennzeichnet, dass** die Drehachse (10) der Düsenscheibe (5) auf einer in der Wand (20) des Düsenkopfes (8) um eine Achse (19) drehbar angeordneten Exzenterscheibe (15) exzentrisch zu der Achse (19) der Exzenterscheibe (15) angeordnet ist.

5. Laserkopf nach einem der vorangegangenen Ansprüche 2 bis 4, **dadurch gekennzeichnet, dass** die Düsenscheibe (5) über einen, Stellmotor (2) verstellbar ist.

6. Laserkopf nach einem der vorangegangenen Ansprüche, **dadurch gekennzeichnet, dass** eine Kalottenöffnung (12) im Düsenkopf (8) für den Durchtritt des Laserstrahls (11) größer als der Düsendurchmesser ist.

7. Laserkopf nach einem der vorangegangenen Ansprüche, **dadurch gekennzeichnet, dass** Einlasskanäle (1) in dem Gehäuse (16) für das Arbeitsgas derart in die Strahlkammer (14) munden, dass die Achsen der Einlasskanäle (1) die Längsachse (17) der Strahlkammer (14) nicht schneiden.

8. Laserkopf nach einem der vorangegangenen Ansprüche, **dadurch gekennzeichnet, dass** das Gehäuse (16) einen Mündungstrichter (9) aufweist, in dessen Inneren sich eine spitz zulaufende kegelförmige Strahlkammer (14) befindet und der von dem kalottenförmigen Düsenkopf (8) umgeben ist.

9. Laserkopf nach einem der vorangegangenen Ansprüche, **dadurch gekennzeichnet, dass** der Düsenkopf (8) auf das Gehäuse (16) aufschraubbar ist.

## Claims

1. Laser head for a laser beam processing machine, said head having a housing (16), in the interior of which are disposed a beam chamber (14) and, at the end, a nozzle (13) for the discharge of the laser beam (11) and an operating gas, a nozzle head (8) being situated on the housing (16) and having alternating nozzles (5, 13) disposed on the internal side, which alternating nozzles are retained on the wall (20) of the nozzle head (8) so as to be rotatable about an axis of rotation (10) and can be introduced into the beam path of the laser beam (11), **characterised in that** the nozzle head (8) is dome-shaped, and the axis of rotation (10) is inclined obliquely relative to the axis (17) of the laser beam (11).

2. Laser head according to claim 1, **characterised in that** the nozzles (13) are disposed on a nozzle plate (5) with the nozzle opening on the same radius relative to the axis of rotation (10).

3. Laser head according to claim 2, **characterised in that** the nozzle plate (5) is shaped to correspond to the curvature of the nozzle head (8) on the side facing the internal side of the nozzle head.

4. Laser head according to claim 3, **characterised in that** the axis of rotation (10) of the nozzle plate (5) is disposed on an eccentric disc (15), which is disposed in the wall (20) of the nozzle head (8) so as to be rotatable about an axis (19), eccentrically relative to the axis (19) of the eccentric disc (15).

5. Laser head according to one of the preceding claims 2 to 4, **characterised in that** the nozzle plate (5) is displaceable via a setting motor (2).

6. Laser head according to one of the preceding claims, **characterised in that** a dome-shaped opening (12) in the nozzle head (8) for the passage of the laser beam (11) is greater than the nozzle diameter.

7. Laser head according to one of the preceding claims, **characterised in that** inlet channels (1) in the housing (16) for the operating gas extend into the beam chamber (14) in such a manner that the axes of the inlet channels (1) do not intersect the longitudinal axis (17) of the beam chamber (14).

8. Laser head according to one of the preceding claims, **characterised in that** the housing (16) has a funnel-shaped orifice (9), in the interior of which is situated a tapered, conical beam chamber (14), and which orifice is surrounded by the dome-shaped nozzle head (8).

9. Laser head according to one of the preceding claims, **characterised in that** the nozzle head (8) can be screwed onto the housing (16).

## Revendications

1. Tête laser pour une machine d'usinage par faisceau laser avec un boîtier (16) présentant à l'intérieur une chambre de faisceau (14) et au bout une buse (13) pour la sortie du faisceau laser (11) et d'un gaz de travail, le boîtier (16) comportant une tête de buse (8) qui présente du côté intérieur des buses interchangeables (5, 13) qui sont retenues de manière mobile autour d'un axe de rotation (10) sur la paroi (20) de la tête de buse (8) et qui peuvent être placées dans le chemin optique du faisceau laser (11), **caractérisée par le fait que** la tête de buse (8) est en forme de calotte et que l'axe de rotation (10) est incliné en biais par rapport à l'axe (17) du faisceau laser (11).

2. Tête laser selon la revendication 1, **caractérisée par le fait que** les buses (13) sont disposées sur un disque à buses (5) avec les ouvertures de buse sur le même rayon par rapport à l'axe de rotation (10).

3. Tête laser selon la revendication 2, **caractérisée par le fait que** le disque à buses (5) est formé suivant la courbure de la tête de buse du côté tourné vers le côté intérieur de la tête de buse (8).

4. Tête laser selon la revendication 3, **caractérisée par le fait que** l'axe de rotation (10) du disque à buses (5) est disposé sur un disque excentrique (15) mobile autour d'un axe (19) dans la paroi (20) de la tête de buse (8), excentriquement par rapport à l'axe (19) du disque excentrique (15).

5. Tête laser selon l'une des revendications précédentes 2 à 4, **caractérisée par le fait que** le disque à buses (5) peut être déplacé au moyen d'un moteur de positionnement (2).

6. Tête laser selon l'une des revendications précédentes, **caractérisée par le fait qu'**une ouverture de calotte (12) dans la tête de buse (8) pour le passage du faisceau laser (11) est plus grande que le diamètre de la buse.

7. Tête laser selon l'une des revendications précédentes, **caractérisée par le fait que** des canaux d'entrée (1) dans le boîtier (16) pour le gaz de travail débouchent dans la chambre de faisceau (14) de telle manière que les axes des canaux d'entrée (1) ne coupent pas l'axe longitudinal (17) de la chambre de faisceau (14).

8. Tête laser selon l'une des revendications précédentes, **caractérisée par le fait que** le boîtier (16) présente un entonnoir d'embouchure (9) à l'intérieur duquel se trouve une chambre de faisceau (14) s'effilant en forme de cône et qui est entouré par la tête de buse (8) en forme de calotte.

9. Tête laser selon l'une des revendications précédentes, **caractérisée par le fait que** la tête de buse (8) peut être vissée sur le boîtier (16).
